(19) **Europäisches Patentamt European Patent Office Office européen des brevets**

(11) **EP 3 907 646 B1**

(12) **EUROPEAN PATENT SPECIFICATION**

(45) Date of publication and mention
of the grant of the patent:
**17.06.2026 Bulletin 2026/25**

(51) International Patent Classification (IPC):
**G06F 30/20** (2020.01)    **G06F 30/15** (2020.01)
**G06Q 10/0631** (2023.01)    **G06Q 10/20** (2023.01)

(21) Application number: **21171547.9**

(22) Date of filing: **30.04.2021**

(52) Cooperative Patent Classification (CPC):
**G06F 30/20; G06F 30/15; G06Q 10/06311;
G06Q 10/20**

(54) **OPERATIONS OPTIMIZATION ASSIGNMENT CONTROL SYSTEM WITH COUPLED SUBSYSTEM MODELS AND DIGITAL TWINS**

BETRIEBSOPTIMIERUNGSZUWEISUNGSSTEUERUNGSSYSTEM MIT GEKOPPELTEN SUBSYSTEMMODELLEN UND DIGITALEN ZWILLINGEN

SYSTÈME DE COMMANDE DES ATTRIBUTIONS D'OPTIMISATION DES OPÉRATIONS AVEC MODÈLES DE SOUS-SYSTÈMES COUPLÉS ET JUMEAUX NUMÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2020 US 202016870212**

(43) Date of publication of application:
**10.11.2021 Bulletin 2021/45**

(73) Proprietor: **General Electric Company
Evendale, OH 45215 (US)**

(72) Inventors:
• **JOHNSON, Christopher**
  **Schenectady, 12345 (US)**
• **ESCRICHE, Lorenzo**
  **Schenectady, 12345 (US)**
• **DESHMUKH, Dinakar**
  **Schenectady, 12345 (US)**
• **ARGUELLO, Michael**
  **Schenectady, 12345 (US)**
• **BAYRAM, Altug**
  **Schenectady, 12345 (US)**

(74) Representative: **Openshaw & Co.
8 Castle Street
Farnham, Surrey GU9 7HR (GB)**

(56) References cited:
**US-A1- 2017 286 572    US-A1- 2017 323 231
US-A1- 2018 039 249    US-A1- 2019 138 662**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to systems and methods of performing optimization and controlling the assignment of resources utilizing digital twins (DTs), and more particularly, to systems and methods that utilize DTs to capture the interaction of physical flows between multiple DTs and business state flows that objects being controlled are subject to in the real world.

### BACKGROUND

A digital twin (DT) is a digital version of a machine in the disclosed embodiments. Once created, the DT can be used to represent the machine in a digital representation of a real world system (which itself can be described as a DT of the process that the system implements). The DT is created such that it mirrors the form and behavior of the corresponding machine with respect to its operational capabilities, reliability and efficiencies. Additionally, the DT may mirror the status of the machine within a greater system such as physical and/or business systems. For example, sensors may be placed on the machine to capture real-time (or near real-time) data from the physical object that is relayed to a remote DT. The remote DT can then make any changes necessary to maintain its correspondence to the twinned asset. The optimizing control assignments can then make changes to prescribed operating duty cycles and maintenance actions to achieve business system key process indicator probabilities at selected time intervals, for example.

Conventional DT implementations are designed with a focus on object-level behaviors. A current focus of DT technology is to create a digital counterpart of an object that can be used to identify opportunities to increase an object's efficiency in its physical energy conversion and reliability in operational use. For example, it has been demonstrated that a wind turbine's DT can be used to provide up to 20% more energy capacity than a wind turbine without a DT. This is achieved through the collection, visualization, and analysis of data from the wind turbine, the use of predictive analytics to assist the operational strategy planning and dynamical control in operation, subject to living and physical constraints. This is an object-level spatial DT because it only captures the object during operation.

Other conventional systems employ a broader view, with an object-level spatiotemporal DT. This DT captures the object's characteristics from design, engineering, production, operation, service, maintenance, end of life and financial perspective. To capture the spatiotemporal aspects, some systems use a monolithic representation approach in which an object's digital representation aggregates all facets and data required from different lifecycle stages. This approach, referred to as the mechatronic object, may not be efficient because the resulting object quickly becomes bloated by the aggregation of all necessary data and analytics. Moreover, this DT does not capture the interaction flows between different DTs or the business flows that objects are subject to in the real world.

Accordingly, a need exists for systems and methods that dynamically and optimally derive DTs and then use them to capture the interaction flows between multiple DTs and business flows that objects are subject to in the real world.

### SUMMARY

The invention is defined by the appended claims. Claim 1 defines a system and claim 9 defines a method. In the following, apparatus and/or methods referred to as embodiments that nevertheless do not fall within the scope of the claims should be understood as examples useful for understanding the invention.

The features and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosure. As used in the specification and in the claims, the singular form of 'a', 'an', and 'the' include plural referents unless the context clearly dictates otherwise.

### BRIEF DESCRIPTION OF THE DRAWINGS

The embodiments set forth in the drawings are illustrative and exemplary in nature and are not intended to limit the subject matter defined by the claims. The following detailed description of the illustrative embodiments can be understood when read in conjunction with the following drawings, where like structure is indicated with like reference numerals and in which:

FIG. 1A schematically depicts an example computing network for performing system optimization of an asset and business operations utilizing digital twins (DTs) according to one or more embodiments shown and described herein;

FIG. 1B schematically depicts an example computing device for performing system optimization of an asset and business operations utilizing DTs according to one or more embodiments shown and described herein;

FIG. 2 depicts an illustrative block diagram of an example system hierarchy for optimization at various levels according to one or more embodiments shown and described herein;

FIG. 3A depicts an illustrative example of an asset optimization of the system hierarchy block diagram for optimization of FIG. 2 according to one or more embodiments shown and described herein;

FIG. 3B depicts an illustrative example of a system optimization continuing from FIG. 3A according to one or more embodiments shown and described herein;

FIG. 4 illustrates an example a high-level block diagram of a DT system according to one or more embodiments shown and described herein;

FIG. 5 illustrates an example DT having six modules according to one or more embodiments shown and described herein;

FIG. 6 depicts a flow diagram of an illustrative method for optimizing asset and business operations according to one or more embodiments shown and described herein; and

FIG. 7 depicts an illustrative time plot depicting the utilization and selection of a plurality of asset DTs to use in a system simulation with optimization over a time horizon.

## DETAILED DESCRIPTION

Referring to the figures, embodiments of the present disclosure are generally related to optimization systems and methods that configure and operate DT models of the underlying asset system and business elements to help drive operational optimizations. In general, the systems and methods described herein provide the capability to manage business level optimization by using business models coupled through a business integrated system that allows feedback from one business element to the next. The system can provide real time optimization. For example, the system utilizes historical, current, and prescriptive future time domains to optimize a plurality resource assignments to achieve multiple objectives desired of the optimized operations in a present (real) time domain. Additionally, the system provides management of the optimized state through tracking critical business parameters that indicate a state of business optimization.

In some embodiments, DT models are coupled to each other through a major system inside a business element and then optimized across multiple elements. In other words, the system provides optimization through the operation of optimization tools in real time and/or utilizes optimizations performed off-line and applies operation tracking to ensure the system is operating within optimization limits, or used in a hypothetical planning phase such as the design of a complex system of assets. Moreover, the system is capable of managing multiple optimization threads that may be independent within the business unit or aggregated optimizations that lead to the overall optimization of the business unit and asset operations.

In general, without systems and methods described herein, optimization and physical control is a difficult process to manage and deliver across a complex business because the optimization can quickly exceed current computational capabilities with respect to the time constant required for the computations, for example, the present disclosure contemplates a system that optimizes one, hundreds, or thousands of potential futures across a next deterministic time step(s) or through transitory states or events of a plurality of physical assets through millions of operational increments and completing the optimization in the desired accuracy and/or time bounds. The systems and methods described herein provide methodologies for providing optimization within current computational capabilities. In some embodiments, this is accomplished through a hierarchy system structure that utilizes DT models of components, sub-systems, and/or systems of an asset and models of business units. In such embodiments, the system may compute partial differential sensitivities, may learn how an adjustment to a particular model will affect a change in other models, how a dynamical change in one time interval will affect other future intervals of time with respect to asset and system dynamics and thereby minimize the optimization compute space and the need to re-compute and/or restructure the optimization in its entirety.

The system may be modeled as subsystem models such as DT models. The DT models are coupled together to provide their relevant inputs through a system hierarchy that allows optimization at any and/or all levels and the ability to check for sub-optimization functions. As described in more detail herein, the DT models include their relevant fleet management protocols that feed the hierarchy of the system. For example, a fleet may refer to a fleet of aircraft, vehicles, ships, or the like engaged in an activity such as transportation of good or people. Additionally, in some embodiments, the system can be driven in a simulation environment to allow for tuning and "what if" calculations.

DTs in the disclosed embodiments are, in ways, different from simulations. Simulations provide an understanding of what may happen in the future real world when presented with generated exogenous conditions or emulated with historical data. DTs may, in one embodiment, be stateless with respect to time and thus utilized in the current time domain to reconcile a hidden variable or be used to compute a very near term physical output from existing sensor data. In another embodiment, DTs may be called by a simulator which traverses the time domain. Presently, there is an unmet need to call from a plurality of DTs for simulating a system, however, this is addressed by the systems and methods disclosed herein. There is a need then, unmet by the current art, to call from a plurality of DTs, the optimal DT from the viable set of DTs for one or more periods of time and one or more state computation methods according to the system variables being computed for analysis, decision support or automation in complex business-physical system of systems.

In the current time context, DTs, like simulations, can help provide an understanding of what may happen in the real world as time unfolds. However, DTs also provide an understanding of what is physically happening, that is how the asset or business unit is behaving in the real-world and causal understanding, for example, by reconciling physical dynamics which may not be directly measurable but inferred or computed as being the only possible internal dynamic given that the physical system is mimic modeled and compared to real time signals. This is accomplished through a continuous influx of information that is provided to a DT and reconciliation between its computed physical state and the empirically observed physical state to estimate what the missing internal value(s) must be. The present embodiments utilize this feature and go several steps farther by integrating multiple DTs, and optionally other types of models, together in a system hierarchy where optimization processes are implemented at various levels in the hierarchy to achieve real-time or almost real-time optimization parameters (as an output of an optimization of a level) and/or operation protocols and/or insights to physical constraints which manifest themselves as operational limits. Operation protocols include the events, activities, and/or threshold ranges that should be implemented or maintained to achieve a desired objective, for example of reaching and/or maintaining the operation of a system in an optimized state. Hidden constraints may include the internal physical dynamics of a complicated engineered asset, such as a turbine, whose internal pressure or temperature or flow signals may not be directly measurable by a physical sensor, and are or should be limited in their operation. For example, a firing temperature should be limited so that it does not exceed the material properties of an engine, which may have reduced thermal properties as a result of wear through prior operations.

In the forecasted future time context, physical measurement signals from live operations do not yet exist, therefore, instead, DTs rely on computed estimates and exogenous conditions determined from a system model. These future time contexts are operationally valuable because it enables the optimization of operations in the current time domain, given prior choices and implications and viable future operating choices so as to cause the real system to operate optimally over one or multiple-time domains. However, the many simulated futures with replications to estimate probabilities consume significant computing resources. The present method rationalizes not only the optimal DT for the one or more time domains, but also to achieve the computed system response specificity and calculation duration.

The following will now describe optimization systems and methods for optimizing business operations related to an asset by utilizing DT models in a hierarchy system structure. The various systems and methods will now be described in more detail herein with specific reference to the corresponding drawings.

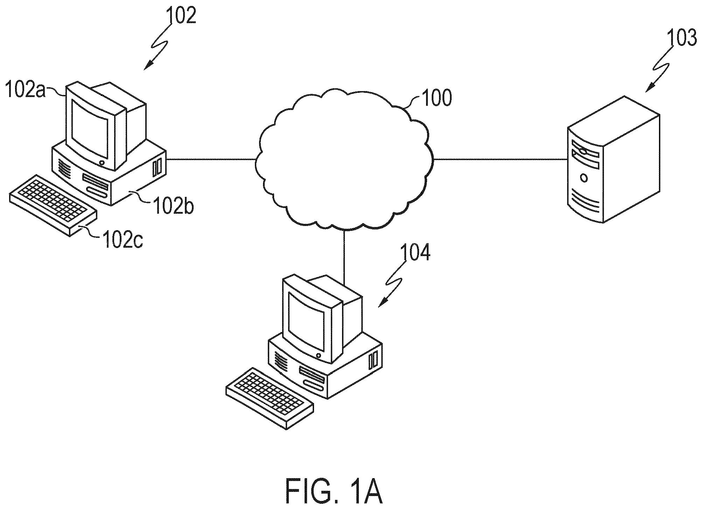

Referring now to the drawings, FIG. 1A depicts an exemplary network 100, illustrating components for a system for performing system optimization of an asset and business operations utilizing DTs, according to one or more embodiments shown and described herein. As illustrated in FIG. 1A, a network 100 may include a wide area network, such as the internet, a local area network (LAN), a mobile communications network, a public service telephone network (PSTN) and/or other network and may be configured to electronically and/or communicatively connect a user computing device 102, a computing device 103 (also referred to herein as an electronic control unit or ECU), and an administrator computing device 104.

The user computing device 102 may include a display 102a, a processing unit 102b and an input device 102c, each of which may be communicatively coupled together and/or to the network 100. The user computing device 102 may be used to interface with a user who may manipulate and/or configure a DT model, a business model, an optimization process or the like. Additionally, included in FIG. 1A is the administrator computing device 104. In the event that the computing device 103 requires oversight, updating, or correction, the administrator computing device 104 may be configured to provide the desired oversight, updating, and/or correction.

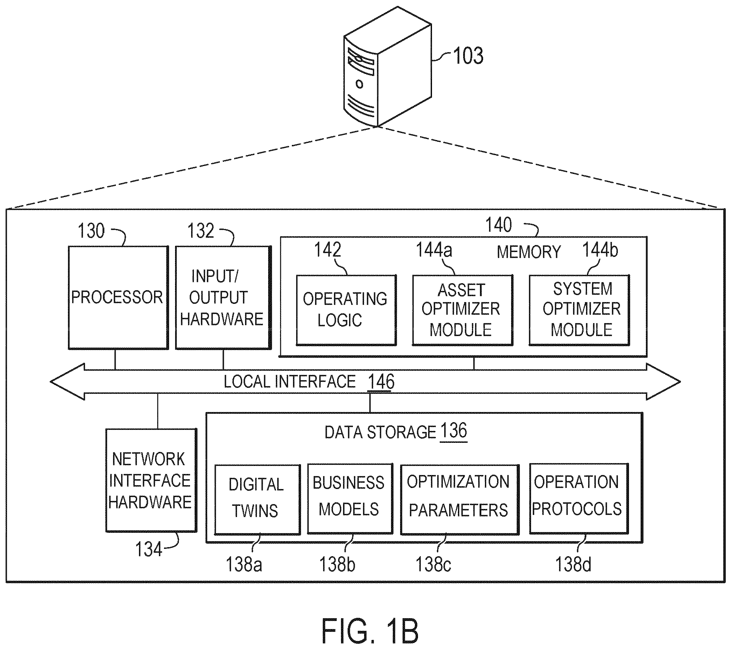

It should be understood that while the user computing device 102 and the administrator computing device 104 are depicted as personal computers and the computing device 103 is depicted as a server, these are merely examples. More specifically, in some embodiments, any type of computing device (e.g., mobile computing device, personal computer, server, and the like) may be utilized for any of these components. Additionally, while each of these computing devices is illustrated in FIG. 1 as a single piece of hardware, this is also an example. More specifically, each of the user computing device 102, the computing device 103, optionally for performing an optimization by one or more of the processes described herein, and administrator computing device 104 may represent a plurality of computers, servers, databases, and the like. For example, each of the user computing device 102, the computing device 103, and administrator computing device 104 may form a distributed or grid-computing framework for implementing the methods described herein.

Turning to now to FIG. 1B, FIG. 1B depicts an example computing device 103 for performing system optimization of an asset and business operations utilizing DTs, according to one or more embodiments shown and described herein. In particular, FIG. 1B depicts the computing device 103, from FIG. 1, while further illustrating a system for performing system optimization of an asset and business operations utilizing DTs. The computing device 103 may utilize hardware, software, and/or firmware, according to embodiments shown and described herein. While in some embodiments, the computing device 103 may be configured as a general-purpose computer with the requisite hardware, software, and/or firmware, in some embodiments, the computing device 103 may be configured as a special purpose computer designed specifically for performing the functionality described herein.

As also illustrated in FIG. 1B, the computing device 103 may include a processor 130, input/output hardware 132, network interface hardware 134, a data storage component 136, and a memory component 140. The data storage component 136 stores DTs 138a, business models 138b, optimization parameters 138c, and operation protocols 138d. The memory component 140 may be machine readable memory (which may also be referred to as a non-transitory processor readable memory). The memory component 140 may be configured as volatile and/or nonvolatile memory and, as such, may include random access memory (including SRAM, DRAM, and/or other types of random access memory), flash memory, registers, compact discs (CD), digital versatile discs (DVD), and/or other types of storage components. Additionally, the memory component 140 may be configured to store operating logic 142 and logic for implementing an asset optimizer module 144a and a system optimizer module 144b (each of which may be embodied as a computer program, firmware, or hardware, as an example).

The operating logic 142 may include an operating system and/or other software for managing components of the computing device 103. The asset optimizer module 144a may include logic configured to optimize one or more DTs that define an asset or multiple assets, as will be described in detail below. The system optimizer module 144b may include logic configured to optimize a business operation in conjunction with the optimization parameters received from an optimization of the asset and/or multiple assets, as will be described in detail below. The asset optimizer module 144a and system optimizer module 144b will be described in more detail with reference to the following figures.

A local interface 146 is also included in FIG. 1B and may be implemented as a bus or other interface to facilitate communication among the components of the computing device 103.

The processor 130 may include any processing component(s) configured to receive and execute programming instructions (such as from the data storage component 136 and/or the memory component 140). The instructions may be in the form of a machine readable instruction set stored in the data storage component 136 and/or the memory component 140. The input/output hardware 132 may include a monitor, keyboard, mouse, printer, camera, microphone, speaker, and/or other device for receiving, sending, and/or presenting data. The network interface hardware 134 may include any wired or wireless networking hardware, such as a modem, LAN port, Wi-Fi card, WiMAX card, mobile communications hardware, and/or other hardware for communicating with other networks and/or devices.

It should be understood that the data storage component 136 may reside local to and/or remote from the computing device 103 and may be configured to store one or more pieces of data for access by the computing device 103 and/or other components. As illustrated in FIG. 1B, the data storage component 136 stores DTs 138a. The DTs 138a are digital replicas of a living or non-living physical entity. That is, a DT is a digital version of a machine (also referred to as an "asset"). Once created, the DT can be used to represent the machine in a digital representation of a real world system. The DT is created such that it computationally mirrors the behavior of the corresponding machine. Additionally, the DT may mirror the state of the machine within a greater system. For example, sensors may be placed on the machine to capture real-time (or near real-time) data from the physical object to relay it back to a remote DT. The DT can then make any changes necessary to maintain its correspondence to the twinned asset, providing operations instruction, diagnostics, insight to unmeasurable internal physical dynamics, insight to efficiencies and reliability.

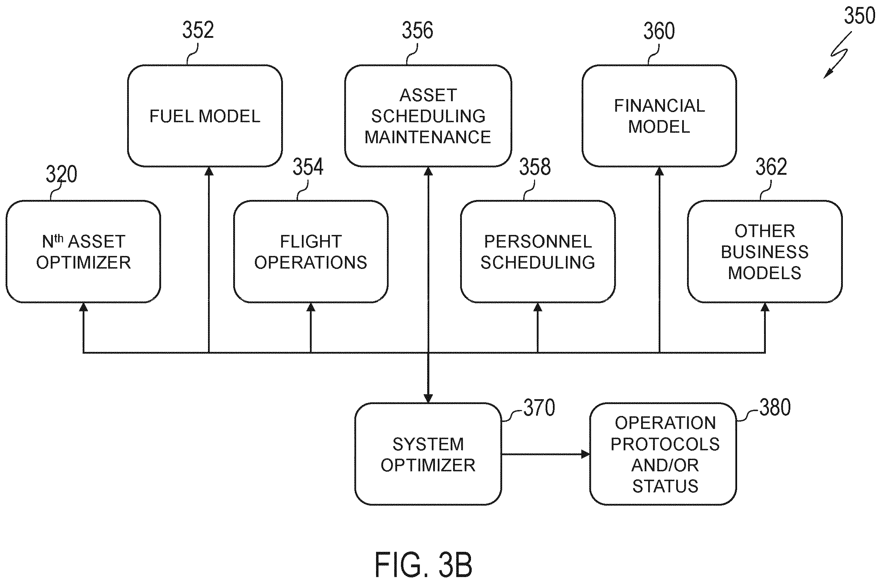

The data storage component 136 may also include business models 138b, which may be structured as a DT or other type of virtual model of a business operation comprised of one or more physical state estimating DTs that are operationally linked via the business operation. Business models 138b may include any model that represents a business unit or a business objective. For example, business models 138b may include a fuel model 352 (FIG. 3B), a flight operations model 354 (FIG. 3B), an asset scheduling maintenance model 356 (FIG. 3B), a personnel scheduling model 358 (FIG. 3B), a financial model 360 (FIG. 3B), and/or other business models 362 (FIG. 3B). The aforementioned business models are only illustrative and may be replaced or supplemented with other business models depending on the type of business and the operations a user is seeking to optimize. Business models will be described in more detail with reference to FIG. 3B below.

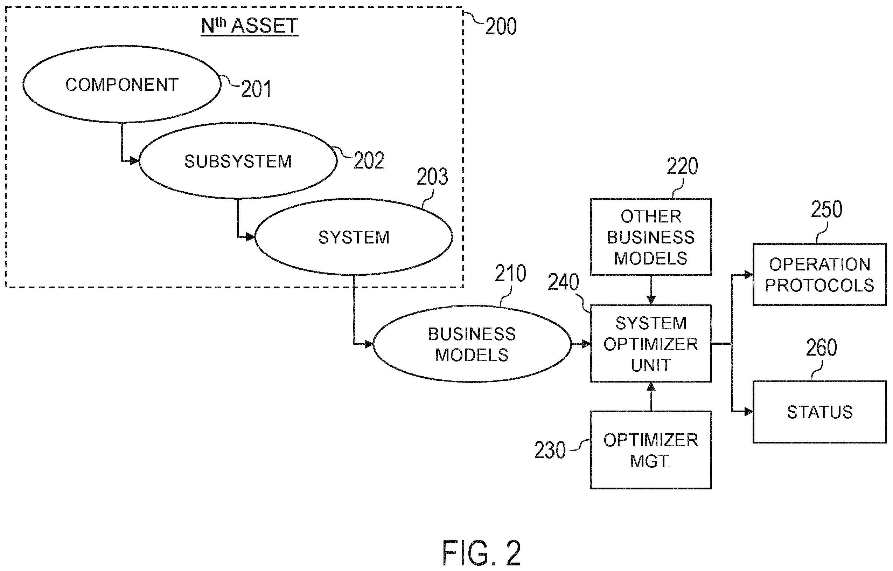

Still referring to FIG. 1B, the data storage component 136 may also include optimization parameters 138c. The optimization parameters 138c include intermediate parameters to optimization processes that occur at various levels of the system hierarchy. (An example system hierarchy is depicted and described below with reference to FIG. 2). The optimization parameters 138c may be generated by an optimization process and then stored in a data storage component 136 until the optimization parameters 138c are needed by a subsequent process. However, in some embodiments, the optimization parameters 138c may not be stored in the data storage component 136, rather they may be directly input to a subsequent model or process.

The data storage component 136 may also include operation protocols 138d. Operation protocols 138d may include the events, activities, and/or threshold ranges that should be implemented or maintained to achieve a desired objective, for example of reaching and/or maintaining the operation of a system in an optimized state. The operation protocols 138d may be determined through optimizing the system.

Turning now to FIG. 2, an illustrative block diagram of an example system hierarchy for optimization at various levels is depicted. The system hierarchy depicted in FIG. 2 includes an asset optimization level 200 and a business model optimization level where business models 210 are optimized with input from the optimization from the asset optimization level 200. In some embodiments, the asset optimization level 200 includes one or more assets that may be optimized, for example, a fleet of aircraft. Considering a single asset, one or more DTs may be created and utilized for optimizing the asset. In some embodiments, the asset may be defined by one or more component DTs 201 for the components of the asset. In some embodiments, the asset may be defined by one or more subsystem DTs 202, which may include one or more DTs that define a subsystem of the asset or a combination of one or more component DTs 201. In some embodiments, an asset may be defined by a system level DT 203. It should further be understood that an asset may be defined by a combination of DTs at various levels, for example, at the component, subsystem, and/or system level.

An asset optimizer module 144a (FIG. 1B) may be implemented to generate optimization parameters for the asset, thereby optimizing the asset for an intended or desired function or operation. For example, a user may desire an asset that is capable of having low offline maintenance time and high long flight fuel efficiency for carrying cargo. The asset optimizer module 144a (FIG. 1B) may be configured with these requirements and optimize an asset, generating optimization parameters that define the components and/or subsystems of the asset as well as operating conditions such as anticipated maintenance. The one or more DTs defining the asset may further be configured to receive real-time information, such as sensor data from operations of the asset, that enables the asset optimizer module 144a (FIG. 1B) to provide optimization parameters for a predefined time period (e.g., one that is defined by a user) or for a projection of time into the future to determine future economics and/or operations of the asset such as when maintenance may be required.

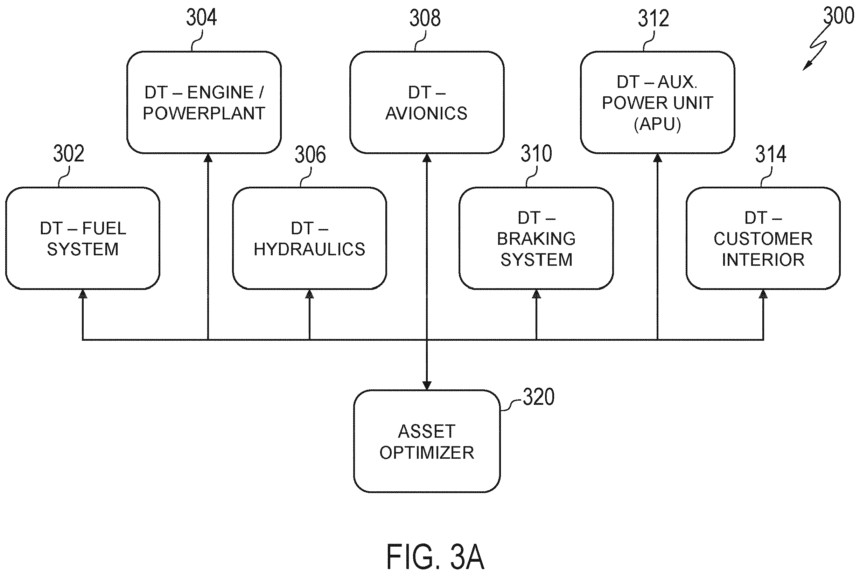

Turning briefly to FIG. 3A a more detailed example of an asset defined by a plurality of subsystem DTs at an asset optimization level 200 (FIG. 2) is depicted in a block diagram 300. For purposes of explanation, the asset described herein is an aircraft. However, it should be understood that the asset may be any object such as a vehicle, facility, or other tangible object such as that an aircraft and/or its engines, and within an engine and/or its modules. Said objects may be components of a business system bound by contractual terms, membership of a fleet or a component on an entity's financial statements. An aircraft includes many components forming many systems and subsystems. For example, an aircraft includes one or more engines, a fuel system, hydraulics, avionics, a breaking system, an auxiliary power unit (APU), a customer interior defining the cargo space of the aircraft, and/or other systems and components. A fleet may be governed by a long term service agreement or financing terms and accounted for in one or more financial statements. The system may evolve through time, with the mix of assets and their performance also changing by intent or in response to exogenous forces or duty change. In embodiments, a DT may be generated for each of the components and/or subsystems of the aircraft system. For example, an aircraft may be defined by a DT 302 for the fuel system, one or more DTs 304 for the one or more engines, a DT 306 for the hydraulics, a DT 308 for the avionics, a DT 310 for the braking system, a DT 312 for the APU, a DT 314 for the customer interior, and/or other DTs for other systems and components. Each of the DTs may be interconnected with each other by way of the asset optimizer 320. The asset optimizer 320 implements the asset optimizer module 144a so that the asset may be optimized and optimization parameters may be generated. The asset optimizer 320 effectively creates a network of DTs for the aircraft so that adjustments to one DT may be implemented within the other connected DTs as they would in a real-world aircraft. FIG. 3A

Referring back to FIG. 2, the optimization parameters obtained from optimizing an asset at a first level of the system hierarchy may be included with the business models 210 and subsequently input to the system optimizer unit 240. In some embodiments, the system optimizer unit also may connect to other business models 220 which may not be linked to the asset but may be related to an overall business operation. Additionally, in some embodiments, an optimizer management tool 230, for example, implemented through a user computing device 102 (FIG. 1A) may be communicatively coupled with the system optimizer unit 240. The optimizer management tool 230 may provide the system optimizer unit with parameters such as desired objectives that should be achieved through the optimization, the ability to track critical elements of the optimization, and/or the ability to provide updates to the system optimizer module 144b (FIG. 1A) implemented and executed by the system optimizer unit 240.

The system optimizer unit 240, through the system optimizer module 144b, generates and outputs a set of operation protocols 250 and/or an indication of the optimization status 260 of the system. The operation protocols 250 include the events, activities, and/or threshold ranges that should be implemented or maintained to achieve a desired objective, for example of reaching and/or maintaining the operation of a system in an optimized state. The optimization status 260 may include tracking of critical elements that provide an indication as to how optimized the system is or whether certain optimization parameters are near their desired limits. For example, if a financial business unit includes a range defining the desired revenue or expenses and the optimization manages to obtain a result within the range, but near one of the extremes, the status may indicate the same. In some embodiments, the aforementioned range may be identified by a user as a critical element for tracking purposes and thus be displayed on a display device (for example, display device 102a, FIG. 1A) for tracking purposes.

Turning briefly to FIG. 3B a more detailed example of a business unit related to an asset defined by a plurality of subsystem DTs is depicted in a block diagram 350. More specifically, FIG. 3B is a continuation of the block diagram 300 depicted in FIG. 3A. FIG. 3B depicts a subsequent level of the system hierarchy. In this example embodiment, the subsequent level of the system hierarchy is the business unit optimization level. This level includes optimization parameters from the asset optimization level and business models. For example, the business models depicted in FIG. 3B include a fuel model 352, a flight operations model 354, an asset scheduling maintenance model 356, a personnel scheduling model 358, a financial model 360, and/or other business models 362. The aforementioned business models are only illustrative and may be replaced or supplemented with other business models depending on the type of business and the operations a user is seeking to optimize.

The fuel model 352 may be a DT or another model defining the business operations associated with fuel purchasing, apportionment, refinement, sales or the like. In some embodiments, these activities may be closely related to the operations of an asset and a customer's desire to maintain fuel expenses within a defined range or reduce fuel expenses. The flight operations model 354 may be a model that defines flight scheduling, route planning, or the like. The asset scheduling maintenance model 356 may be a model defining the maintenance requirements and predicted maintenance in the future based on current operation activities, optimization goals defined by other business models, and/or the asset configuration communicated from through the optimization parameters from the asset optimizer 320.

The business unit being modeled may include a personnel scheduling model 358 configured to model the personnel needs, related expenses, and the like in response to the asset and other business unit activities. The personnel scheduling model 358 may also provide constraints to the system by way of a total number of persons to employ, the total amount of money allocated to personnel capital, definition of in-situ and service shop maintenance, materials usage, operations limitations or allowed exceedances, and/or the like. In some embodiments, the business unit may further be defined by a financial model 360 which may define a financial model for the business unit with parameters that are adjustable during an optimization process. Furthermore, the business unit may be defined by other business models 362 not disclosed herein but that may be readily apparent to those interacting with a particular business unit.

The system optimizer 370 effectively creates a network of DTs and/or other types of models for the business operations defining a business unit so that adjustments to one DT may be implemented within the other connected DTs as they would in a real-world business unit. As discussed with reference to FIG. 2, the system optimizer 370 (which corresponds to the system optimizer unit 240 depicted in FIG. 2), through the system optimizer module 144b, generates a set of outputs 380, for example, a set of operation protocols 250 (FIG. 2) and/or an indication of the optimization status 260 (FIG. 2) of the system.

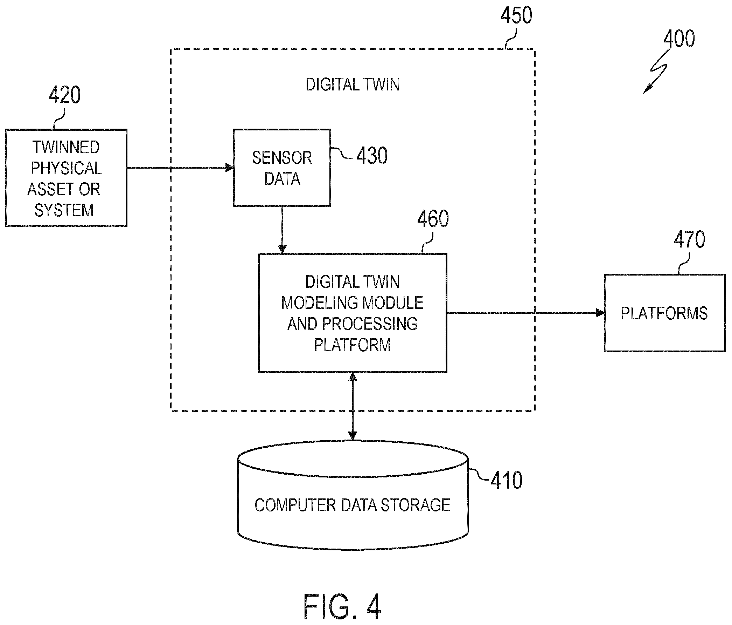

Turning to FIG. 4, a high-level architecture of a system 400 in accordance with some embodiments is depicted. The system 400 includes a computer data store 410 (e.g., a data store of the user computing device 102, the computing device 103, and/or the administrator computing device 104 as depicted in FIG. 1A) that provides information to a DT 450 of a twinned physical asset or system 420. Data in the computer data store 410 might include, for example, information about the twinned physical asset or system 420, such as historic engine sensor information about a number of different aircraft engines and prior aircraft flights (e.g., external temperatures, exhaust gas temperatures, engine model numbers, takeoff and landing airports, etc.).

The DT 450 may, according to some embodiments, access the computer data store 410, and utilize a probabilistic model creation unit to automatically create a predictive model that may be used by DT modeling software and processing platform to create a prediction and/or result that may be transmitted to various user platforms 470 as appropriate (e.g., for display to a user). As used herein, the term "automatically" may refer to, for example, actions that can be performed with little or no human intervention.

As used herein, devices, including those associated with the system 100 and any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The DT 450 may store information into and/or retrieve information from various data sources, such as the computer data store 410 and/or user platforms 470. The various data sources may be locally stored or reside remote from the DT 450. Although a single DT 450 of a twinned physical asset or system 420 is shown in FIG. 4, any number of such DTs may be included. Moreover, various devices described herein might be combined according to embodiments of the present invention. For example, in some embodiments, the DT 450 of a twinned physical asset or system 420 and one or more data sources might comprise a single apparatus. The DT software functions may be performed by a constellation of networked apparatuses, in a distributed processing or cloud-based architecture.

A user may access the system 400 via one of the user platforms 470 (e.g., a user computing device 102 or a computing device 103 as depicted in FIG. 1A which may be a personal computer, tablet, or smartphone) to view information about and/or manage a DT in accordance with any of the embodiments described herein. According to some embodiments, an interactive graphical display interface may let an operator define and/or adjust certain parameters and/or provide or receive automatically generated recommendations or results.

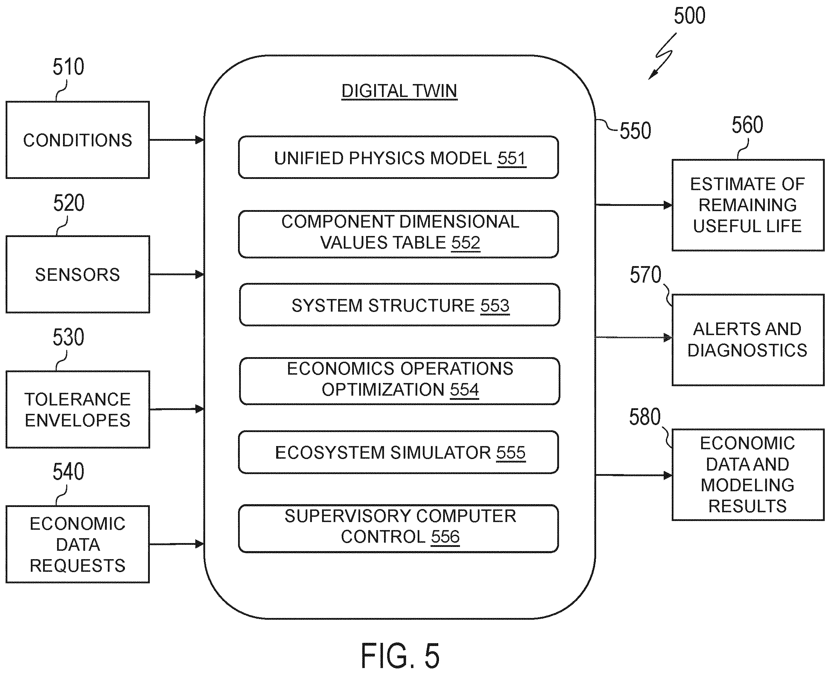

FIG. 5 now depicts a more detailed implementation of a DT having six modules. A DT may have two functions: monitoring a twinned physical system and performing prognostics on it. Another function of a DT may comprise a limited or total control of the twinned physical system. In one embodiment, a DT of a twinned physical system includes (1) one or more sensors sensing the values of designated parameters of the twinned physical system and (2) a realistic computer model of all of the subject system's multiple elements and their interactions under a spectrum of conditions. This may be implemented using a computer model having substantial number of degrees of freedom and may be associated with an integration of complex physical models including, for example, computational fluid dynamics, structural dynamics, thermodynamic modeling, stress analysis modeling, and/or a fatigue cracking model. Such an approach may be associated with, for example, a Unified Physics Model ("UPM"). Moreover, embodiments described herein may solving a resultant system of partial differential equations used in applied stochastic finite element methods, utilize a high performance computing resource, possibly on the scale of teraflops per second, and be implemented in usable manner. The computing systems engaged to derive states and responses require operational control, which will be described in more detail herein.

Considering, for example, FIG. 5 which illustrates a DT 550 including such a unified physics model (UPM) 551. The DT 550 may use algorithms, such as, but not limited to, an Extended Kalman Filter, to compare model predictions with measured data coming from a twinned physical system. The difference between predictions and the actual sensor data, called variances or innovations, may be used to tune internal model parameters such that the DT 550 is matched to the physical system. The DT's UPM 551 may be constructed such that it can adapt to varying environmental or operating conditions being seen by the actual twinned asset. The underlying physics-based equations may adapted to reflect the new reality experienced by the physical system.

The DT 550 also includes a Component Dimensional Values ("CDV") table 552 which might comprise a list of all of the physical components of the twinned physical system. Each component may be labeled with a unique identifier, such as an Internet Protocol version 6 ("IPv6") address. Each component in the CDV table 552 may be associated with, or linked to, the values of its dimensions, the dimensions being the variables most important to the condition of the component. A Product Lifecycle Management ("PLM") infrastructure, if beneficially utilized, may be internally consistent with CDV table 552 so as to enable lifecycle asset performance states as calculated by the DT 550 to be a closed loop model validation enablement for dimensional and performance calculations and assumptions. The number of the component's dimensions and their values may be expanded to accommodate storage and updating of values of exogenous variables discovered during operations of the DT.

The DT 550 may also include a system structure 553 which specifies the components of the twinned physical system and how the components are connected or interact with each other. The system structure 553 may also specify how the components react to input conditions that include environmental data, operational controls, and/or externally applied forces.

The DT 550 might also include an economic operations optimization 554 that governs the use and consumption of an industrial system to create operational and/or key process outcomes that result in financial returns and risks to those planned returns over an interval of time for the industrial system users and service providers. Similarly, the DT 550 might include an ecosystem simulator 555 that may allow all contributors to interact, not just at the physical layer, but virtually as well to traverse time, operations fulfilment, and/or economic domains. Component suppliers, or anyone with expertise, might supply the DT models that will operate in the ecosystem and interact in mutually beneficial ways. Said models may be connected directly or indirectly, for example, through data services or via exchange of parameters in digital form. The DT 550 may further include a supervisory computer control 556 that controls the overall function of the DT 550, accepts inputs, and produces outputs. The flow of data, data storage, calculations, and/or computing required to calculate states, along with the subsequent use of the performance and life state estimation for operations and PLM closed loop design, may be orchestrated by the supervisory computer control 556 such that a digital thread connects design, manufacturing, and/or operations.

As used herein, the term "on-operation" may refer to an operational state in which a twinned physical system and the DT 550 are both operating. The term "off-operation" may refer to an operational state in which the twinned physical system is not in operation but the DT 550 continues to operate. The phrase "black box" may refer to a subsystem that may be defined by the DT 550 for recording and preserving information acquired on-operation of the twinned physical system to be available for analysis off-operation of the twinned physical system. The phrase "tolerance envelope" may refer to the residual, or magnitude, by which a sensor's reading may depart from its predicted value without initiating other action such as an alarm or diagnostic routine. The term "tuning" may refer to an adjustment of the DT's software or component values or other parameters. The operational state may be either off-operation or on-operation. The term "mode" may refer to an allowable operational protocol for the DT 550 and its twinned physical system. There may be, according to some embodiments, a primary mode associated with a main mission and secondary modes.

Referring still to FIG. 5, the inputs to the DT 550 may include conditions 510 that include environmental data, such as weather-related quantities, and operational controls such as requirements for the twinned physical system to achieve specific operations as would be the case for example for aircraft controls. Inputs may also include data from sensors 520 that are placed on and within the twinned physical system. The sensor suite embedded within the twinned physical system may provide an information bridge to the DT software. Other inputs may include tolerance envelopes 530, which may specify time and magnitude regions that are acceptable regions of differences between actual sensor values and their predictions by the DT. Other inputs to the system may include maintenance inspection data, manufacturing design data, and/or hypothetical exogenous data (e.g., weather, fuel cost and defined scenarios such as candidate design, data assignment, and maintenance/or work scopes). Economic data requests 540 may also be input into the DT 550. For example, economic data requests may include targets and/or ranges for the economic operations of the system or asset modeled by the DT.

"Economic operations" may be used to create demonstrable business value. For example, it might be assigned to operate with and track assets over their lifetimes or the duration of a maintenance / performance contract. The economic operations DT software model may include an economic operations optimization module for creating economic data and using it in modeling for synergizing optimal operational control of a twinned physical system and economic considerations involving the physical system (e.g., inspection scheduling, related logistics, assessment and mitigation of financial risk, etc.).

The outputs from the DT 550 may include a continually updated estimate of the twinned physical system's Remaining Useful Life ("RUL") 560. It is often desirable to make assessment and/or predictions regarding the operation of a real world physical system, such as an electro-mechanical system. For example, it may be helpful to predict a Remaining Useful Life ("RUL") of an electro-mechanical system, such as an aircraft engine, to help plan when the system should be replaced. Likewise, an owner or operator of a system might want to monitor a condition of the system, or a portion of the system, to help make maintenance decisions, budget predictions, etc. Even with improvements in sensor and computer technologies, however, accurately making such assessments and/or predictions can be a difficult task. For example, an event that occurs while a system is not operating might impact the RUL and/or condition of the system but not be taken into account by typical approaches to system assessment and/or prediction processes.

Other outputs from the DT 550 may include alerts and diagnostics 570. For example, alerts of possible twinned physical system component malfunctions may be output. The results of the DT's diagnostic efforts and/or performance estimates of key components within the twinned physical system may also be output. For example, with the DT 550, an operator might be able to see how key sections of a gas turbine are degrading in performance. This might be an important consideration for maintenance scheduling, optimal control, and other goals. According to some embodiments, information may be recorded and preserved in a black box respecting on-operation information of the twinned physical system for analysis off-operation of the twinned physical system. The DT 550 may also include output economic data and modeling results 580. The economic data and/or modeling results 580 may be optimization parameters 138c (FIG. 1B) that are used as inputs to subsequent DTs and models of the optimization system. In particular, for example, the economic data and modeling results maybe include considerations such as inspection scheduling, related logistics, assessment and mitigation of financial risk, or the like for a particular asset such as an aircraft engine.

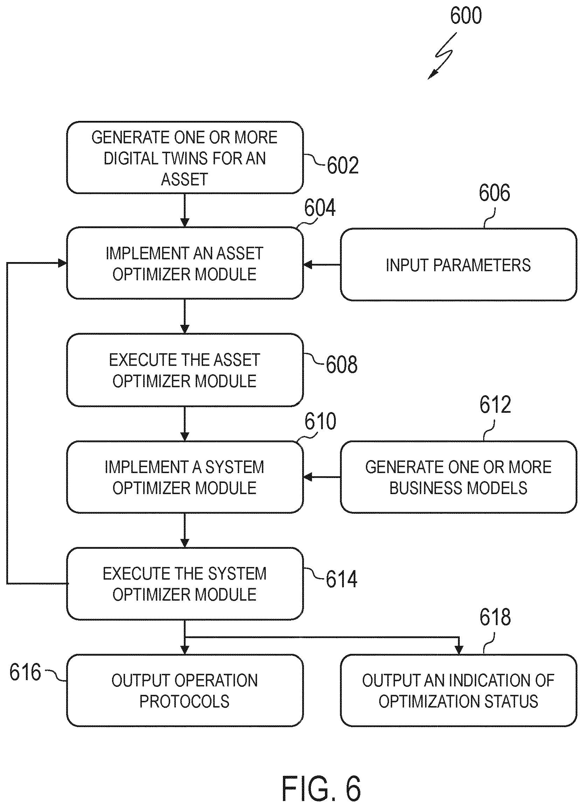

FIG. 6 illustrates a method depicted in flow diagram 600 that may be performed by some or all of the elements of the systems depicted and described herein. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein. Additionally, the method depicted in the flow diagram 600 is described with respect to computing device 103 (FIGS. 1A and 1B). However, this is only an example.

In some embodiments, at block 602, a computing device 103 (FIGS. 1A and 1B) may generate one or more DTs defining one or more asset systems of an asset such as an aircraft, the intentional combination of DTs being a DT of the subsystem or system. For example, but without limitation, the asset may be an aircraft and one of the asset systems may be the engine of the aircraft. A DT, for example, DT 304 (FIG. 3A) defining the engine may be generated to digitally model the engine. The computing device, at block 604, then implements an asset optimizer module which may receive input parameters obtained from a user at block 606. In some embodiments, the input parameters may include conditions 510, sensors 520 (e.g., sensor values obtained from a real world asset system), tolerance envelopes 530, and/or economic data requests 540 (e.g., defining economic goals for the asset system which may be an aircraft engine). In some embodiments, the input parameters may be input parameters obtained from a user through a user computing device 102 (FIG. 1A). Referring back to the aircraft engine example, the input parameters may include fuel flow functions, operation altitudes, operating temperatures and/or environment pressures, or the like which define the aircraft engine so that it may be accurately modeled in the digital system. Implementing the asset optimizer module at block 604 causes the DTs to be interconnected such that inputs and outputs from corresponding DTs are linked together. For example, as depicted in FIG. 3A DTs 302-314 are interconnected through an asset optimizer 320 implementing the asset optimizer module. That is, when the asset optimizer module is executed by the computing device at block 608 the DTs, for example, DTs 302-314 of FIG. 3A, are optimized and optimization parameters for the one or more assets are generated. The optimization parameters may be input to block 610 where the computing device implements a system optimizer module. The system optimizer module may receive one or more business models, for example, business models 352-362 (See FIG. 3B), generated at block 612. The one or more business models correspond to the operations of a business unit that is to be optimized. The business unit may be an airline managing one or more aircraft (i.e., assets) and seeking to optimize both the operations of the asset in conjunction with business operations such as flight scheduling, personnel scheduling, and other business operations.

At block 614, the computing device executes the system optimizer module which optimizes the one or more business models in conjunction with the optimization parameters generated by the asset optimizer module from the asset layer of the system hierarchy (e.g., the asset optimization level 200 depicted in FIG. 2). For example, the computing device is configured with the system optimizer unit 240 (FIG. 2) that implements the system optimizer module 144b (FIG. 1B). Said execution may be limited by response time or available computing resources and thus requiring direct control of the computing process to achieve a required level of specificity over a duration of operations time, within a certain computing envelope. At block 616, the computing device outputs operation protocols, for example, operation protocols 250 described with reference to FIG. 2, which may be implemented in a real world setting in order to achieve the optimized system defined by the method implemented by the computing device described herein. For example, an operation protocol may be that a particular engine on a particular aircraft be flown on a defined set of routes to minimize the need maintenance time while maximizing its operational costs and maintaining fuel economy targets. In addition, in some embodiments, the computing device, at block 618, may output an indication of the optimization status of the system. The indication of the optimization status may include tracking elements that indicate the level of optimization and/or relatedness of optimization parameters and/or operation protocols with respect to a defined or desired operational limit.

In some embodiments, at block 614, the operation parameters and/or the operation protocols generated from execution of the system optimizer module are fed back to block 604, and integrated with the DTs of the asset. For example, referring briefly to FIG. 2, the operation protocols 250 may be fed back into the DTs at the asset optimization level 200 for additional refinement/optimization activities. This is only one example of feeding back optimization parameters. Feedback of optimization parameters may be implemented between any stage of the system hierarchy, for example, between the system optimizer unit 240 and the business models, the operation protocols 250 output by the system and the asset optimization level 200, such that the optimization of the asset systems and business unit operations may be interconnected. In the event block 604 receives a set of optimization parameters, the computing device may execute a second iteration of the method depicted and described herein to update the optimization of the system. For example, in some instances, when optimizing the system in view of a financial model 260 at the business operations optimization level (e.g., including system blocks 210, 220, 230, 240 depicted in FIG. 2), an asset configuration, such as a selection of components in an asset, may need to be adjusted or redefined to meet the optimization protocols driven by the financial model 260 (FIG. 2). The system is thus re-optimized with the adjusted components of the asset by feeding back an optimization outcome resulting from the inclusion of the business models.

In some embodiments, the utilization of a plurality of physical asset DTs through a time horizon as orchestrated to interact and compute key process indicators which account for desired system of systems behavior may include the utilization of a simulation. The simulation may be in continuous time or discrete time simulation. The entities being simulated may be directed to act by a central analytical reasoner or may have autonomous behavioral responses computed by each physical asset with system dynamics emerging with agent behavior. The time horizon may be historical (e.g., based on past sensor readings, events, and/or outcomes), current, or future. Entities in the system simulation may be physical, informational, or economic in nature. Simulation scenarios may be deterministic or probabilistic and traverse in a directed or undirected graph pattern through time. Where the simulation is configured to explore probabilistic paths, replications are made through definable time horizons which may be controlled by the disclosed system, comprised of a plurality of DTs which may be optimally called to describe elements of the system. In some embodiments, the interval for computation may be prescribed to have a limit set by time bound or accuracy.

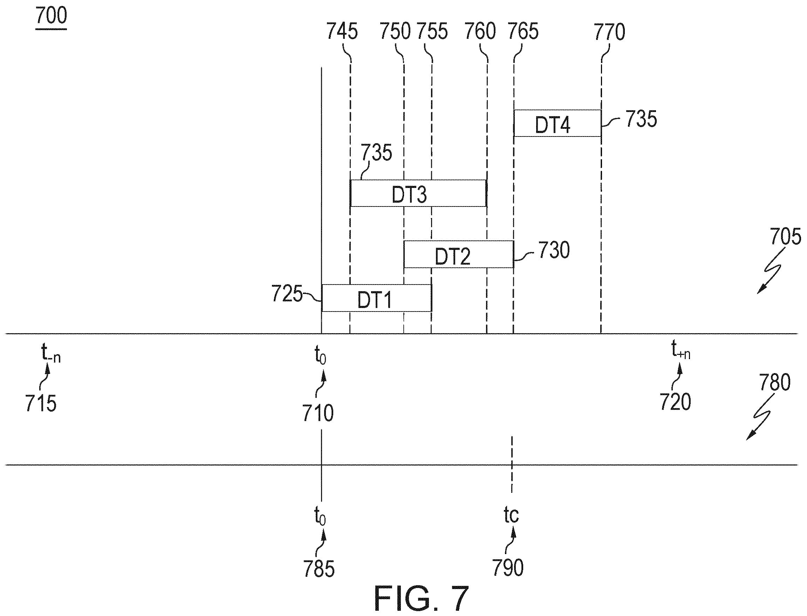

Turning now to FIG. 7, an illustrative time plot 700 depicting the utilization of a plurality of asset DTs through a time horizon is depicted. More specifically, a method for controlling the intentional selection of DTs to use in the system simulation, the time horizon of certain DTs, the contribution to forecast variance and limits to computing duration are controlled by the disclosed system. A continuum of operations time 705 contains a horizon of historical 715 time, current time 710 and future time 720 in which the physical asset and business system operate.

As disclosed prior, the assets and operations are modeled with mathematical abstractions disclosed as DTs, whose models may be first principle in nature such as an engineering thermodynamic model or a statistical model such as a Weibull distribution or an artificial intelligence model such as a machine learning based representation or a set of rules or closed form expressions or even an observed historical trajectory. These models may have differing accuracies converting their externalities into their responses. In the figure, blocks 725, 730, 735 and 740 represent different DTs for the same asset in one embodiment and a mixture of assets in another embodiment. These DTs may have different computational durations.

The potential computation time 780 may or may not be sufficiently short for the decision support, analysis, or automation which the disclosed system gives rise to enabling. In instances where a certain response time, $t_c$, 790 is needed from a starting point in time, $t_0$, 785, the system may call certain ones of the DTs 725,730,735,740 based upon their computation speed to effect the most complete computation within the certain response time, $t_c$, 790. In instances where a certain assurance of computational variance, for example expressed through Equation 1 below is required in a certain time interval 790, the system may call certain ones of the DTs 725,730,735,740 based upon their computation speed on an absolute basis or according to a ratio of a DT's contribution to variance 775 per unit time as computed by Equation 2.

$$\sum_1^Y W_k DT_k \frac{\partial Y}{\partial X_{n_{t_{ni}-t_n}}} \qquad \text{Eq. 1,}$$

where $W_k$ is a weighted percentage of DT for the selected k, $DT_k$ represents the partial distribution Y for increment of X during time interval n, and n is the indexing of time steps from an initial $t_{ni}$ to the latter $t_n$.

$$\frac{\Delta sensitivity}{\Delta compute\ time} \geq Threshold \qquad \text{Eq. 2}$$

In Equation 2, $\Delta$*compute time* is the change in time to run the DTs and simulation scenarios and $\Delta$*sensitivity* is the change in Y for X from Equation 1. When learning at a rate per compute time interval is greater than the threshold rate, the learning process is continued. When the rate of variation learning (i.e., change in sensitivity per compute interval) falls below the threshold, then learning may be stopped. For example, if learning is desired to have a 1% variation reduction for a particular aspect computed by the twins per minute of compute time, the 1 standard deviation variation in net present value (NPV) by 2% per minute of compute time with a given set of DTs, learning may be run for 2 minutes. However, a desired rate of learning may be possible with a first combination of DTs, but may not be possible with another selected combination of DTs. In some embodiments, the desired variation reduction rate may be achieved but take too long to compute with a specific combination of DTs. That is, for example, the combination of DTs may be complex models that utilize large amounts of compute time such as a finite element model.

A given DT approach may include many model types. In example embodiments, first principle, statistical, machine learning, historical observation, rules and/or heuristics define DT model types 725,730,735,740. Should an operational scenario include a future forecast component such as would be the case if a current operations action were desired to be taken in current time, $t_0$, 710 that would effect a future time period, $t_{+n}$, 720, thus four candidate models, as depicted in Fig 7, could be selected. DT models 725, 730 and 735 overlap in their time horizons. Each DT model may have a certain strength over their cohort of other models such as compute time or precision or ability to explain system dynamics with respect to a varying input assumption. The sum of accumulated speed, precision, explanation of variance is in one embodiment an objective of Equation 1 that may be maximized or minimized. There may be multiple criteria such as, in one embodiment, the minimization of one or more model output variation per unit of change in one or more DT model inputs as well as minimization of compute time, $t_c$, 790 or the ratio of change in contributing sensitivities to the change in computation time, Equation 2. In regions of time, for example as depicted along the continuum of operations time 705 there may be more or less contributions to the key process indicator(s) being modeled. For example, in an economic calculation where a risk adjusted discount rate is used to bring future, $t_{+n}$, 720 cash flows into a current, $t_0$, 710 value, such as a net present value, the per unit contribution to KPI variation from model DT4 740 would not be as much as that from DT1 725. The complete path of future simulation may partially utilize each of the DTs as needed to meet the criteria of variation, operations time duration, compute time duration and accuracy.

DTs are invoked to achieve the computational goals and limits and may ultimately form a compilation of model activation to complete the trajectory through time, for example from current time, $t_0$, 710 to future time, $t_{+n}$, 720. For example, but without limitation, DT1 725 in Fig 7 is the only viable DT model for any reason (compute speed, accuracy, forecast interval, and etc.) available from a start time to time 745, at which interval only DT3 735 is viable up to time 760 where two DTs 730 and 735 have candidacy. $DT_K$ is selected according to the one or more objectives or constraints. DT1 725 may be optimally used from a starting time 710 to 745 where, for example DT3 735 is called for interval spanning 745 to 760, upon which time DT2 is utilized from 760 to 765 and DT4 may be utilized from 765 to 770.

There may be instances where the combination of DT models 725, 730, 735, 740 of assets boosts forecast accuracy by independently computing through the operations time horizon 710, 720 and a weighted percentage $W_k$ of each DT's outputs is made to construct the composite forecast. The weighted percentage $W_k$ of each DT's outputs may change through the forecast interval in time bounds $t_{ni}$ to $t_n$. DTs, therefore, are selected by the computation optimization 775, 793 in time, by weight, for the key process indicators being forecasted and optimized for by the KPI optimizer. These optimization capabilities are nested where the operations of the system of systems 705 are optimized and the computing control of the DT selection to meet computation time constraints (e.g., expressed by Equation 3, below) and/or contribution to variance or accuracy 775 is met.

$$\sum t_{compute} < t_c \qquad\qquad \text{Eq. 3}$$

It is understood that DTs can be computed or operated in parallel with other DTs and that a DT may be purposefully composed by the method disclosed from other DTs. However, computing should be complete when the required time constant for the decision support or automation is reached. Alternatively, when operating in the variation reduction mode, that is solving equations 1 and 2, the system may be run until the learning threshold is met. Moreover, in some embodiments, these constraints may be nested. That is, the variation mode may be operated as an inner loop and the total compute time as an outer loop, or vice versa. A predetermined duration of compute time may be defined for a combination of DTs and then the combination of DTs yielding the rate of learning or variation level that meets the compute time constraint or the learning threshold.

The functional blocks and/or flowchart elements described herein may be translated onto machine-readable instructions. As non-limiting examples, the machine-readable instructions may be written using any programming protocol, such as: descriptive text to be parsed (e.g., such as hypertext markup language, extensible markup language, etc.), (ii) assembly language, (iii) object code generated from source code by a compiler, (iv) source code written using syntax from any suitable programming language for execution by an interpreter, (v) source code for compilation and execution by a just-in-time compiler, etc. Alternatively, the machine-readable instructions may be written in a hardware description language (HDL), such as logic implemented via either a field programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components.

It should now be understood that the systems and methods described herein disclose optimization of business unit operations and related assets organized in a system hierarchy structure that utilize interconnected DTs where the selection of DTs is optimally made according to the variation and/or compute time objectives. For example, the systems and methods provide the capability to manage business level optimization by using business models coupled through a business integrated system that allows feedback from one business element to the next. The system can provide quasi or real time optimization in physical asset control embodiments. Additionally, the system provides management of the optimized state through tracking critical business parameters that indicate a state of business optimization now or in the simulated future.

It will be apparent to those skilled in the art that various modifications and variations can be made without departing from the scope of the disclosure. Since modifications, combinations, sub-combinations and variations of the disclosed embodiments incorporating the substance of the disclosure may occur to persons skilled in the art, the disclosure should be construed to include everything within the scope of the appended claims.

## Claims

1. A system comprising:

   a plurality of digital twins corresponding to one or more asset systems of an asset;
   one or more business models corresponding to one or more business operations; and
   an electronic control unit (ECU), wherein the ECU is programmed to:

      implement an asset optimizer module, wherein implementing the asset optimizer module interconnects the plurality of digital twins for optimization over a time horizon, wherein the plurality of digital twins are selected for optimization by the asset optimizer module according to at least a computation time and a contribution to variance to meet a desired rate of variability reduction per unit of computation time;
      execute the asset optimizer module over the time horizon, wherein the asset optimizer module optimizes one or more parameters of the plurality of digital twins to obtain one or more key process indicators for the one or more asset systems;

implement a system optimizer module, wherein the system optimizer module receives the one or more optimization parameters and the one or more business models;

execute the system optimizer module, wherein the system optimizer module generates one or more operation protocols for the one or more business models; and

output, to a user, the one or more operation protocols for implementation in a real-world asset system;

wherein the one or more business models comprises at least one of:

a fuel management model,
a flight operations model, or
an asset maintenance scheduling model.

2. The system of claim 1, wherein the ECU is further programmed to:
output one or more indications of optimization status, wherein the indications define a level of optimization of at least one of the plurality of digital twins or the one or more business models.

3. The system of claim 1 or 2, wherein the ECU is further programmed to:
feedback the one or more operation protocols into one or more of the plurality of digital twins such that the ECU executes another instance of at least one of the asset optimizer module or the system optimizer module to generate an updated set of the one or more operation protocols for implementation in the real-world asset system.

4. The system of any of claims 1 to 3, wherein the system optimizer module is configured to optimize each of the one or more business models based on an interplay between the one or more business models and the one or more optimization parameters.

5. The system of any of claims 1 to 4, wherein the ECU is further programmed to:
select one or more of the plurality of digital twins having a computation time less than or equal to the time horizon for a simulated future period according to a limit to compute time duration.

6. The system of any of claims 1 to 5, wherein the ECU is further programmed to:
select one or more of the plurality of digital twins having a computation time less than or equal to the time horizon of a simulated future period according to a desired rate of forecast variability reduction per unit of computation time while concurrently optimizing for the operational forecast KPI objectives.

7. The system of any of claims 1 to 6, wherein one or more of the plurality of digital twins comprises one or more first sublevel digital twins corresponding to one or more asset subsystems of the one or more asset systems.

8. The system of claim 7, wherein the one or more first sublevel digital twins comprises one or more component level digital twins corresponding to one or more components of the one or more asset subsystems.

9. A method comprising:

implementing, with a computing device, an asset optimizer module, wherein implementing the asset optimizer module interconnects a plurality of digital twins for optimization over a time horizon, wherein the plurality of digital twins are selected for optimization by the asset optimizer module according to at least a computation time and a contribution to variance to meet a desired rate of variability reduction per unit of computation time;

executing, with the computing device, the asset optimizer module, wherein the asset optimizer module optimizes one or more parameters of one or more of the plurality of digital twins to obtain one or more key process indicators for one or more asset systems of an asset;

implementing, with the computing device, a system optimizer module, wherein the system optimizer module receives the one or more optimization parameters and one or more business models corresponding to one or more business operations;

executing, with the computing device, the system optimizer module, wherein the system optimizer module generates one or more operation protocols for the one or more business models; and

outputting, with the computing device, to a user, the one or more operation protocols for implementation in a real-world asset system;

wherein the one or more business models comprises at least one of:

a fuel management model,
a flight operations model, or
an asset maintenance scheduling model.

10. The method of claim 9, further comprising:
outputting, with the computing device, one or more indications of optimization status, wherein the indications define a level of optimization of at least one of the plurality of digital twins or the one or more business models.

11. The method of claim 9 or 10, further comprising:
feeding back the one or more operation protocols into one or more of the plurality of digital twins such that the ECU executes another instance of at least one of the asset optimizer module or the system optimizer module to generate an updated set of the one or more operation protocols for implementation in the real-world asset system.

12. A non-transitory machine readable medium embodying a set of instructions that, when executed by one or more processors, cause the one or more processors to perform operations, the method of any of claims 9 to 11.

**Patentansprüche**

1. System, das Folgendes umfasst:

eine Vielzahl von digitalen Zwillingen, die einem oder mehreren Asset-Systemen eines Assets entsprechen;
ein oder mehrere Geschäftsmodelle, die einem oder mehreren Geschäftsabläufen entsprechen; und
eine elektronische Steuereinheit (ECU), wobei die ECU programmiert ist, zum:

Implementieren eines Asset-Optimierungsmoduls, wobei die Implementierung des Asset-Optimierungsmoduls die Vielzahl digitaler Zwillinge zur Optimierung über einen Zeithorizont miteinander verbindet, wobei die Vielzahl digitaler Zwillinge vom Asset-Optimierungsmodul zur Optimierung ausgewählt wird, und zwar unter Berücksichtigung zumindest einer Rechenzeit und eines Beitrags zur Varianz, um eine gewünschte Rate der Variabilitätsreduktion pro Einheit von Rechenzeit zu erreichen;
Ausführen des Asset-Optimierungsmoduls über den Zeithorizont, wobei das Asset-Optimierungsmodul einen oder mehrere Parameter der Vielzahl digitaler Zwillinge optimiert, um einen oder mehrere Schlüsselprozessindikatoren für das eine oder die mehreren Asset-Systeme zu erhalten;
Implementieren eines Systemoptimierungsmoduls, wobei das Systemoptimierungsmodul den einen oder die mehreren Optimierungsparameter und das eine oder die mehreren Geschäftsmodelle empfängt;
Ausführen des Systemoptimierungsmoduls, wobei das Systemoptimierungsmodul ein oder mehrere Betriebsprotokolle für das eine oder die mehreren Geschäftsmodelle generiert; und
Ausgeben des einen oder der mehreren Betriebsprotokolle an einen Benutzer zur Implementierung in einem realen Asset-System;
wobei das eine oder die mehreren Geschäftsmodelle mindestens eines der folgenden umfassen:

ein Kraftstoffmanagementmodell,
ein Flugbetriebsmodell oder
ein Modell zur Planung der Asset-Wartung.

2. System nach Anspruch 1, wobei die ECU ferner programmiert ist, zum:
Ausgeben einer oder mehrerer Anzeigen des Optimierungsstatus, wobei die Anzeigen einen Optimierungsgrad von mindestens einem der Vielzahl von digitalen Zwillingen oder des einen oder der mehreren Geschäftsmodelle definieren.

3. System nach Anspruch 1 oder 2, wobei die ECU ferner programmiert ist, zum:
Feedback des einen oder mehreren Betriebsprotokolle in einen oder mehrere der Vielzahl von digitalen Zwillingen, so dass die ECU eine weitere Instanz von mindestens einem des Asset-Optimierungsmoduls oder des Systemoptimierungsmoduls ausführt, um einen aktualisierten Satz des einen oder mehreren Betriebsprotokolle zur Implementierung im realen Asset-System zu generieren.

4. System nach einem der Ansprüche 1 bis 3, wobei das Systemoptimierungsmodul so konfiguriert ist, dass es jedes des einen oder mehreren Geschäftsmodelle auf der Grundlage eines Zusammenspiels zwischen dem einen oder den mehreren Geschäftsmodellen und den einen oder mehreren Optimierungsparametern optimiert.

5. System nach einem der Ansprüche 1 bis 4, wobei die ECU ferner programmiert ist, zum:
Auswählen eines oder mehrerer der Vielzahl von digitalen Zwillingen, die eine Rechenzeit aufweisen, die kleiner oder gleich dem Zeithorizont für einen simulierten zukünftigen Zeitraum gemäß einer Begrenzung der Rechenzeitdauer ist.

6. System nach einem der Ansprüche 1 bis 5, wobei die ECU ferner programmiert ist, zum:
Auswählen eines oder mehrerer der Vielzahl von digitalen Zwillingen, die eine Rechenzeit aufweisen, die kleiner oder gleich dem Zeithorizont eines simulierten zukünftigen Zeitraums ist, entsprechend einer gewünschten Rate der Reduzierung der Prognosevariabilität pro Rechenzeiteinheit, während gleichzeitig eine Optimierung hinsichtlich der operativen Prognose-KPI-Ziele erfolgt.

7. System nach einem der Ansprüche 1 bis 6, wobei einer oder mehrere der Vielzahl von digitalen Zwillingen einen oder mehrere digitale Zwillinge der ersten Unterebene umfasst, die einem oder mehreren Asset-Subsystemen des einen oder der mehreren Asset-Systeme entsprechen.

8. System nach Anspruch 7, wobei der eine oder die mehreren digitalen Zwillinge der ersten Unterebene einen oder mehrere digitale Zwillinge auf Komponentenebene umfassen, die einer oder mehreren Komponenten der eines oder der mehreren Asset-Subsysteme entsprechen.

9. Verfahren, umfassend:

Implementieren eines Asset-Optimierungsmoduls mit einer Rechenvorrichtung, wobei das Implementieren des Asset-Optimierungsmoduls eine Vielzahl von digitalen Zwillingen zur Optimierung über einen Zeithorizont miteinander verbindet, wobei die Vielzahl von digitalen Zwillingen vom Asset-Optimierungsmodul zur Optimierung ausgewählt wird, basierend auf mindestens einer Rechenzeit und einem Beitrag zur Varianz, um eine gewünschte Rate der Variabilitätsreduktion pro Einheit Rechenzeit zu erreichen;
Ausführen des Asset-Optimierungsmoduls mit der Vorrichtung, wobei das Asset-Optimierungsmodul einen oder mehrere Parameter eines oder mehrerer der Vielzahl von digitalen Zwillingen optimiert, um einen oder mehrere Schlüsselprozessindikatoren für ein oder mehrere Asset-Systeme eines Assets zu erhalten;
Implementieren eines Systemoptimierungsmoduls mit der Vorrichtung, wobei das Systemoptimierungsmodul die einen oder mehreren Optimierungsparameter und ein oder mehrere Geschäftsmodelle empfängt, die einem oder mehreren Geschäftsabläufen entsprechen;
Ausführen des Systemoptimierungsmoduls mit der Vorrichtung, wobei das Systemoptimierungsmodul ein oder mehrere Betriebsprotokolle für die einen oder mehreren Geschäftsmodelle generiert; und
Ausgeben der einen oder mehreren Betriebsprotokolle mit der Vorrichtung an einen Benutzer zur Implementierung in einem realen Asset-System;
wobei das eine oder die mehreren Geschäftsmodelle mindestens eines der folgenden umfassen:

ein Kraftstoffmanagementmodell,
ein Flugbetriebsmodell oder
ein Modell zur Planung der Asset-Wartung.

10. Verfahren nach Anspruch 9, ferner umfassend:
Ausgeben einer oder mehrerer Anzeigen des Optimierungsstatus mit der Rechenvorrichtung, wobei die Anzeigen einen Optimierungsgrad mindestens eines der mehreren digitalen Zwillinge oder des einen oder der mehreren Geschäftsmodelle definieren.

11. Verfahren nach Anspruch 9 oder 10, ferner umfassend:
Feedback des einen oder der mehreren Betriebsprotokolle in einen oder mehrere der Vielzahl von digitalen Zwillingen, so dass die ECU eine weitere Instanz von mindestens einem vom Asset-Optimierungsmodul oder dem Systemoptimierungsmodul ausführt, um einen aktualisierten Satz des einen oder der mehreren Betriebsprotokolle zur Implementierung in das reale Asset-System zu erzeugen.

12. Nicht-flüchtiges, maschinenlesbares Medium, das einen Satz von Anweisungen speichert, die, wenn sie von einem oder mehreren Prozessoren ausgeführt werden, bewirken, dass der eine oder die mehreren Prozessoren Operationen ausführen, das Verfahren nach einem der Ansprüche 9 bis 11.

**Revendications**

1. Système comprenant :

     une pluralité de jumeaux numériques correspondant à un ou plusieurs systèmes d'actifs d'un actif ;
     un ou plusieurs modèles métier correspondant à une ou plusieurs opérations métier ; et
     une unité de commande électronique (ECU), l'ECU étant programmée pour :

          mettre en œuvre un module d'optimisation d'actifs, la mise en œuvre du module d'optimisation d'actifs interconnectant la pluralité de jumeaux numériques pour une optimisation sur un horizon temporel, la pluralité de jumeaux numériques étant sélectionnée pour l'optimisation par le module d'optimisation d'actifs selon au moins un temps de calcul et une contribution à la variance afin de répondre à un taux souhaité de réduction de la variabilité par unité de temps de calcul ;
          exécuter le module d'optimisation d'actifs sur l'horizon temporel, le module d'optimisation d'actifs optimisant un ou plusieurs paramètres de la pluralité de jumeaux numériques afin d'obtenir un ou plusieurs indicateurs clés de processus pour lesdits un ou plusieurs systèmes d'actifs ;
          mettre en œuvre un module d'optimisation de système, le module d'optimisation de système recevant lesdits un ou plusieurs paramètres d'optimisation et lesdits un ou plusieurs modèles métier ;
          exécuter le module d'optimisation de système, le module d'optimisation de système générant un ou plusieurs protocoles opérationnels pour un ou plusieurs modèles métier ; et
          fournir en sortie, à destination d'un utilisateur, lesdits un ou plusieurs protocoles opérationnels destinés à être mis en œuvre dans un système d'actifs réel ;
          lesdits un ou plusieurs modèles métier comprenant au moins un des modèles suivants :

               un modèle de gestion du carburant,
               un modèle des opérations de vol, ou
               un modèle de planification de la maintenance d'actifs.

2. Système selon la revendication 1, dans lequel l'ECU est en outre programmée pour :
   fournir en sortie une ou plusieurs indications d'état d'optimisation, les indications définissant un niveau d'optimisation de la pluralité des jumeaux numériques et/ou desdits un ou plusieurs modèles métier.

3. Système selon la revendication 1 ou 2, dans lequel l'ECU est en outre programmée pour :
   réintroduire lesdits un ou plusieurs protocoles opérationnels dans un ou plusieurs jumeaux numériques de la pluralité de jumeaux numériques, de sorte que l'ECU exécute une autre instance du module d'optimisation d'actifs et/ou du module d'optimisation de système afin de générer un ensemble mis à jour desdits un ou plusieurs protocoles opérationnels destinés à être mis en œuvre dans le système d'actifs réel.

4. Système selon l'une quelconque des revendications 1 à 3, dans lequel le module d'optimisation de système est configuré pour optimiser chacun desdits un ou plusieurs modèles métier sur la base d'une interaction entre lesdits un ou plusieurs modèles métier et lesdits un ou plusieurs paramètres d'optimisation.

5. Système selon l'une quelconque des revendications 1 à 4, dans lequel l'ECU est en outre programmée pour :
   sélectionner un ou plusieurs jumeaux numériques de la pluralité de jumeaux numériques dont le temps de calcul est inférieur ou égal à l'horizon temporel pour une période future simulée selon une limite de durée de calcul.

6. Système selon l'une quelconque des revendications 1 à 5, dans lequel l'ECU est en outre programmée pour :
   sélectionner un ou plusieurs jumeaux numériques de la pluralité de jumeaux numériques dont le temps de calcul est inférieur ou égal à l'horizon temporel d'une période future simulée selon un taux souhaité de réduction de la variabilité des prévisions par unité de temps de calcul, tout en optimisant simultanément les objectifs KPI des prévisions opérationnelles.

7. Système selon l'une quelconque des revendications 1 à 6, dans lequel un ou plusieurs jumeaux numériques de la pluralité de jumeaux numériques comprennent un ou plusieurs jumeaux numériques de premier sous-niveau correspondant à un ou plusieurs sous-systèmes d'actifs desdits un ou plusieurs systèmes d'actifs.

8. Système selon la revendication 7, dans lequel lesdits un ou plusieurs jumeaux numériques de premier sous-niveau comprennent un ou plusieurs jumeaux numériques de niveau composant correspondant à un ou plusieurs composants desdits un ou plusieurs sous-systèmes d'actifs.

9. Procédé comprenant :

la mise en œuvre, au moyen d'un dispositif informatique, d'un module d'optimisation d'actifs, la mise en œuvre du module d'optimisation d'actifs interconnectant une pluralité de jumeaux numériques pour une optimisation sur un horizon temporel, la pluralité de jumeaux numériques étant sélectionnée pour l'optimisation par le module d'optimisation d'actifs selon au moins un temps de calcul et une contribution à la variance afin de répondre à un taux souhaité de réduction de la variabilité par unité de temps de calcul ;

l'exécution, au moyen du dispositif informatique, du module d'optimisation d'actifs, le module d'optimisation d'actifs optimisant un ou plusieurs paramètres d'un ou de plusieurs jumeaux numériques de la pluralité de jumeaux numériques afin d'obtenir un ou plusieurs indicateurs clés de processus pour un ou plusieurs systèmes d'actifs d'un actif ;

la mise en œuvre, au moyen du dispositif informatique, d'un module d'optimisation de système, le module d'optimisation de système recevant lesdits un ou plusieurs paramètres d'optimisation et un ou plusieurs modèles métier correspondant à une ou plusieurs opérations métier ;

l'exécution, au moyen du dispositif informatique, du module d'optimisation de système, le module d'optimisation de système générant un ou plusieurs protocoles opérationnels pour lesdits un ou plusieurs modèles métier ; et

la fourniture en sortie, au moyen du dispositif informatique, à destination d'un utilisateur, desdits un ou plusieurs protocoles opérationnels destinés à être mis en œuvre dans un système d'actifs réel ;

lesdits un ou plusieurs modèles métier comprenant au moins un des modèles suivants :

un modèle de gestion du carburant,
un modèle des opérations de vol, ou
un modèle de planification de la maintenance d'actifs.

10. Système selon la revendication 9, comprenant en outre :
la fourniture en sortie, au moyen du dispositif informatique, d'une ou de plusieurs indications d'état d'optimisation, les indications définissant un niveau d'optimisation de la pluralité des jumeaux numériques et/ou desdits un ou plusieurs modèles métier.

11. Système selon la revendication 9 ou 10, comprenant en outre :
la réintroduction desdits un ou plusieurs protocoles opérationnels dans un ou plusieurs jumeaux numériques de la pluralité de jumeaux numériques, de sorte que l'ECU exécute une autre instance du module d'optimisation d'actifs et/ou du module d'optimisation de système afin de générer un ensemble mis à jour desdits un ou plusieurs protocoles opérationnels destinés à être mis en œuvre dans le système d'actifs réel.

12. Support lisible par machine non transitoire incorporant un ensemble d'instructions qui, lorsqu'elles sont exécutées par un ou plusieurs processeurs, amènent lesdits un ou plusieurs processeurs à effectuer des opérations, selon le procédé de l'une quelconque des revendications 9 à 11.

FIG. 1A

FIG. 1B

FIG. 2

FIG. 3A

EP 3 907 646 B1

FIG. 3B

EP 3 907 646 B1

FIG. 4

EP 3 907 646 B1

FIG. 5

600

GENERATE ONE OR MORE DIGITAL TWINS FOR AN ASSET — 602

IMPLEMENT AN ASSET OPTIMIZER MODULE — 604

INPUT PARAMETERS — 606

EXECUTE THE ASSET OPTIMIZER MODULE — 608

IMPLEMENT A SYSTEM OPTIMIZER MODULE — 610

GENERATE ONE OR MORE BUSINESS MODELS — 612

EXECUTE THE SYSTEM OPTIMIZER MODULE — 614

616 — OUTPUT OPERATION PROTOCOLS

OUTPUT AN INDICATION OF OPTIMIZATION STATUS — 618

FIG. 6

FIG. 7